# EUROPEAN PATENT SPECIFICATION

(11) **EP 3 392 529 B1**
(45) Date of publication and mention of the grant of the patent: **10.03.2021**
(21) Application number: 18162814.0
(22) Date of filing: 20.03.2018
(51) Int. Cl.: F16H 57/04

(54) **A COOLING SYSTEM FOR AN INTERNAL COMBUSTION ENGINE**
KÜHLSYSTEM FÜR EINEN VERBRENNUNGSMOTOR
SYSTÈME DE REFROIDISSEMENT POUR MOTEUR À COMBUSTION INTERNE

(30) Priority: 21.03.2017 IN 201741009808
(43) Date of publication of application: 24.10.2018
(73) Proprietor: TVS Motor Company Limited, Chennai 600006 (IN)
(72) Inventor: Gajjarahalli, Shashanka P., 600 006 Chennai (IN); Havya, Suvanam Venkata Sai Vetha, 600 006 Chennai (IN); Phadnis, Sachin Ramachandra, 600 006 Chennai (IN); Subramoniam, Chithambaram, 600 006 Chennai (IN)
(74) Representative: Patentanwaltskanzlei Matschnig & Forsthuber OG

(56) References cited:
- EP-A1- 2 474 435
- EP-A2- 1 138 591
- EP-A2- 2 910 819

## Description

### TECHNICAL FIELD

The present invention relates generally to a saddle type vehicle. More particularly, the present invention relates to a cooling system employed to cool a continuously variable transmission system in an internal combustion engine of the saddle type vehicle.

### BACKGROUND

A continuously variable transmission (CVT) system is usually adopted in internal combustion (IC) engines wherein mechanically shifting gears by a rider of a two wheeled vehicle can be avoided. The CVT system replaces the gear shift transmission mechanism in the IC engine. Generally, IC engine of all two wheeled vehicles have a transmission system between a crankshaft and the final drive to the wheel of the two wheeled vehicle to change the ratio between the crankshaft rotational speed and the rotational speed of a wheel to provide speed and torque conversions of the two wheeled vehicle. While regular geared transmission system requires that the rider of the two wheeled vehicle manually perform gearshifts, CVT system eliminates this need of performing manual gearshifts by providing automatic change in transmission ratios between the crankshaft rotational speed and the rotational speed of the wheel. The CVT system provides almost infinite transmission ratios which make driving very easy, smooth and efficient. The CVT system comprises a front pulley operably attached to the crankshaft, a rear pulley operably connected to the wheel and a belt rests between them all which are enclosed within a crankcase of the IC engine. The front pulley comprises a variator mechanism and the rear pulley comprises a centrifugal clutch. Different transmission ratios are obtained by changing the effective diameter of the front pulley and the rear pulley while the belt is sitting on them and moving. Since, the CVT system comprises the belt and pulley system, the centrifugal clutch and other moving parts; it is essential to provide a forced air cooling system to cool and CVT system and extract heat which is generated. This improves the efficiency of the CVT system and increases the operating life of the associated components. Typically, forced air cooling systems comprises a cooling fan which is operably connected to the front pulley, and the cooling fan draws air flow through an air intake structure on the crankcase of the IC engine. The air intake structure and its design are very critical as there is potential for entry of water, mud, dust and debris inside which can damage the CVT system and its associated components. Thus to prevent entry of water, mud and debris inside the CVT system and improving IC engine performance as well as to address above discussed problems, the present subject matter proposes an air intake structure for the forced air cooling system.

A Patent literature document EP2474435 describes a cooling air intake structure for V belt type step-less transmission, which includes a cooling air inlet through which cooling air is taken in. The cooling air inlet is formed at a position beside a crankcase cover (transmission case) and in an outer duct member formed as a cover attached to the crankcase cover. Particularly, the cooling air inlet is placed at a position corresponding to a front half of left half transmission case and above a cooling fan side opening formed in the transmission case opposite to drive pulley. Further, cooling air is allowed to flow through the cooling air inlet into the cooling air duct. The flow of air is inverted by a U shaped part so as to direct flow downwards. Use of said U shaped part aids in separating muddy water and dust from the cooling air. However, a challenge exists in ensuring that separated mud and water is prevented from entering into the filter element fitted for purifying the cooling air entering through the air intake structure and thereby in ensuring that said filter element does not get clogged frequently.

Further, another patent literature EP1138591 discloses an outer cover comprising an outside wall forming air passageway cooperating with an inside wall of an inner cover in order to introduce outside air to an air passageway. Particularly, said document discloses a winding shape for the air passageway and a filter mounted in a cylindrical portion of one of the walls forming the air passageway, being secured between the inner cover and the outer cover forming the air passageway. However, said document also does not describe an effective way of preventing dust and debris from clogging the filter. Moreover, since the filter is secured between the inner cover and the outer cover, its size gets limited by the sizes of said inner and outer cover and the space between the inner cover and the outer cover, thereby affecting the area of filtration of the filter which is crucial for effective filtration of cooling air in order to improve efficiency of the CVT system.

A third patent literature EP2910819 also discloses a U shaped path for entry of cooling air into the air intake structure. However, the challenges with respect to effective filtration of cooling air still remains.

### BRIEF DESCRIPTION OF THE DRAWINGS

The detailed description is described with reference to the accompanying figures. The same numbers are used throughout the drawings to reference like features and components.
**Fig. 1****.** illustrates the side view of a two wheeled vehicle employing an embodiment of the present subject matter.
**Fig. 2****.** illustrates an enlarged left side rear view of an internal combustion engine with an air intake structure according to the embodiment of the present subject matter.
**Fig. 3****.** illustrates the side of the internal combustion engine with the air intake structure according to the embodiment of the present subject matter.
**Fig. 4a****.** illustrates the exploded view of the air intake structure according to the embodiment of the present subject matter.
**Fig. 4b****.** illustrates the cross sectional view (X-X) of the air intake structure showing the air flow circulation directing the air to a CVT cover according to the embodiment of the present subject matter.
**Fig. 5a.** and **Fig. 5b****.** illustrates a hood cover of the air intake structure in open condition and close condition according to the embodiment of the present subject matter.
**Fig. 6****.** illustrates a side view of the CVT cover showing the air flow circulation according to the embodiment of the present subject matter.

### DETAILED DESCRIPTION

Various features and embodiments of the present invention here will be discernible from the following further description thereof, set out hereunder. According to an embodiment, an internal combustion (IC) engine described here operates in four cycles. The IC engine is installed in a step through type two wheeled vehicle colloquially called as scooter. It is pertinent to note that the IC engine may be mounted in two wheeled vehicles in different arrangements such as in transverse and longitudinal fashion. However, in the ensuing description, such engine is transversely mounted at a lower portion of the step through type two wheeled vehicle. It is contemplated that the concepts of the present invention may be applied to other types of vehicles and other types of IC engine such as that of the two-stroke type within the spirit and scope of this invention. Further "front" and "rear", and "left" and "right" referred to in the ensuing description of the illustrated embodiment refer to front and rear, and left and right directions as seen from a rear portion of the IC engine and looking forward. The detailed explanation of the constitution of parts other than the present invention which constitutes an essential part has been omitted at suitable places.

Typically, in a two wheeled vehicle such as a scooter, a swinging IC engine is located below the seat at a lower rear portion of the vehicle. The IC engine is swingably supported by a rear suspension system and attached to the frame assembly of the two wheeled vehicle and other end of the IC engine is connected to a rear wheel of the two wheeled vehicle. A CVT system forms a part of the IC engine and is disposed on the rear portion of the IC engine and mounted so as to be disposed on right or left of the two wheeled vehicle. In one embodiment, the CVT system is disposed so as to be oriented towards the left of the two wheeled vehicle as viewed from the rear direction of the two wheeled vehicle. The CVT system is enclosed within a crankcase of the IC engine on the rear side of the IC engine and the CVT system is enclosed by a crankcase cover also called a CVT cover, thus forming an enclosed space within the CVT cover.

The CVT system comprises a front pulley operably attached to a crankshaft (via gear-train), a rear pulley operably connected to the rear wheel (again via another set of gear-train) and a belt rests between them. The front pulley and rear pulley each is made up of two sliding halves with an elastic member applying a positive bias force restricting movement of the rear half of the pulleys. The belt having a fixed length is set between the two halves of the front pulley and the rear pulley.

One of the half of the front pulley which is configured to slide comprises a variator mechanism attached to it. The variator mechanism comprises a plurality of rollers disposed radially in an empty cage which are provided with ramps around a disc. At rest condition, the halves of the front pulley are held open by the belt and the halves of the rear pulley are held closed by the rear elastic member. This condition gives a large gear ratio required for providing starting torque to the two wheeled vehicle. During operation, the drive from the crankshaft is operably connected to the variator mechanism such that, the rollers react to the centrifugal force of rotation and climb along the ramp, and this forces the front pulley to overcome the force of the belt and cause the two halves of the front pulley to come closer. The belt set between the front pulley and rear pulley has a fixed length, so when the front pulley closes, the belt forces the rear pulley apart and thus changes the transmission ratio. Hence, by variation of the throttle by the rider, the speed of the crankshaft varies and the centrifugal forces of the rollers are varied, which allows the rollers to rise outward or fallback. This action is continuous and we can get almost infinite transmission ratio variations to control the torque output and speed output of the saddle type vehicle.

The rear pulley is operably connected to a rear wheel of the saddle type vehicle through a centrifugal clutch. While the sliding half of the rear pulley is connected to the rear elastic member, the centrifugal clutch is connected to the fixed half, and transfers the drive to the rear wheel only when the IC engine has revolutions beyond idling. The function of the centrifugal clutch is to allow the IC engine to idle by isolating the rear wheel from the CVT system. The centrifugal clutch comprises a clutch shoe held by a clutch spring and enclosed in a clutch hub. While the clutch shoe is connected to rear pulley, the clutch hub is connected to the rear wheel. As the speed of IC engine increases above idling speed, centrifugal force causes the clutch shoe to expand and overcome the clutch spring, and comes in contact with the clutch hub. Due to presence of frictional material on the clutch shoe, it begins to drive the clutch hub and the drive is transferred to the rear wheel.

During working of the CVT system, heat is generated inside CVT system due to friction between the pulleys and the belt. There is always some torque loss from belt bending and unbending, sliding in and sliding out, and belt compression. In known cooling systems, there can be torque loss upto 50% which invariably gets converted into lot of heat. There is also significant amount of heat generated due to centrifugal clutch wherein, the clutch shoe may slip on the clutch housing during acceleration and deceleration for example clutch loose during engagement and clutch tight during mid to high throttle range. This heat generated will affect the durability and life of all the components part of the CVT system such as front pulley, rear pulley, belt and centrifugal clutch. Excessive heat generation can also damage the belt, the centrifugal clutch and deteriorate their performance. Hence, generally a forced air cooling system is used to circulate air around the CVT system and extract heat from all the systems.

The forced air cooling system for cooling the CVT system is achieved by using a cooling fan inside CVT crankcase. The cooling fan works on the principle of centrifugal action which forces the air over the belt, front and rear pulleys and the centrifugal clutch. Generally, the rotation of the cooling fan is integrated to the rotation of the crankshaft by connecting it to the front pulley of the CVT system. A CVT cover being a part of the crankcase of the IC engine covers the entire CVT mechanism and the atmospheric air is drawn from an air intake structure located on the CVT cover. Hence, the heat generated due to movement of various CVT components are exposed to the circulating air and the heat will be dissipated to it. The CVT cover will also have an air outlet for hot air exit located away from the air intake structure.

The design of air intake structure on the CVT cover is a very important criterion as it leads to determining the effective performance and efficiency of the forced air cooling system. Further, the location of the air intake structure on the two wheeled vehicle as seen from the side view, it is observed that, the air intake structure is disposed very close to the cylinder head, cylinder block and crankcase. As it is known that one of the major heat sources in the two wheeled vehicle is the IC engine. Hence, the air around the IC engine main body crankcase is always at an elevated temperature. The positioning of the air intake structure close to the IC engine main body crankcase facilitates the drawing of this hot air into the CVT system by the cooling fan to cool the CVT components. The cooling effect will be rendered ineffective as hot air is used to cool the CVT components. Further, the air intake structure opens into the atmosphere enabling direct access of air entry inside the CVT system. This can allow entry of foreign matter into the CVT system. The foreign matter can include water, mud, and other debris which can cause the belt to slip and wear out faster. Further, the air intake structure comprises an air filter foam disposed slightly downstream of the conventional air intake structure which filters the air. But, entry of water, mud and large particles can damage this air filter foam which results in frequent replacement and damage to CVT components. Since, the air intake structure is located at a point on the two wheeled vehicle very close to the ground level, on movement of the saddle type vehicle over a puddle of water or through areas having lot of mud the probability of mud and water entry is higher.

Conventionally, to address this problem of conventional air intake structure on the CVT cover various solutions are known in art. In one solution, the air intake structure is attached to the frame assembly of the two wheeled vehicle, said frame assembly configured to provide a fluid flow passage and thereby to facilitate supply of air to an air intake structure attached to the frame assembly. Hence, the air flow is directed from within the frame assembly to the air intake structure. This solution solves the problem of prevention of entry of foreign matter and also prevents the entry of hot air circulating around the hotter regions of the IC engine, but it has a fundamental drawback. The hollow frame assembly develops a layer of rust due to aging of the inner surface of the hollow frame assembly, and hence there is a high probability of the rust dust entering the air intake structure during drawing of air through the frame assembly. This rust dust can damage the air foam filter and also damage the CVT components. Further, another solution proposes to draw air, said inlet of the air disposed in a maintenance lid located on a lower backside of the step-through space of the two wheeled vehicle, said inlet of air is connected to the air intake structure through a connecting pipe. This suffers from the drawback that, additional components such as connecting pipe is used. Further, the connecting pipe is disposed in a location close to the hotter regions of the IC engine and during prolonged operation can get heated up and hence heating the air as it passes through the connecting pipe. This will reduce the efficiency of the forced air cooling system.

The present invention is addressing all the above drawbacks by providing an air intake structure for the two wheeled vehicle, said air intake structure comprising, a hood cover configured to provide a U-shaped serpentine path for air entry before entering inside the crankcase and said hood cover comprising an air inlet opening, said air inlet opening facing outwards in the two wheeled vehicle width direction.

The air intake structure further comprises, a central portion disposed between the hood cover the crankcase of the IC engine; and an air filter assembly disposed within the central portion and configured to filter air before entry into the crankcase of the IC engine. The air filter assembly comprises of a filter element configured to trap dust from entering the crankcase cover, and a pair of cage members disposed on either side of the filter foam to secure the foam element. The air filter assembly has a rectangular cross section and is assembled to have a filter face oriented perpendicularly with respect to the ground plane. The central portion comprises a receiving portion disposed on one end of the central portion closer to the hood cover, and said receiving portion is configured to accommodate the air filter assembly on its inner surface. To avoid entry of foreign undesirable particles into the cooling system, the entry portion of the air into the CVT cover via an air structure is so configured so as to be disposed substantially upstream of the cylinder head of the power train, substantially above the kick start lever and at least a portion partially overlapping with the floor board when viewed from the side view of the vehicle. As per an aspect of the present invention, the air intake portion along with the air intake structure is disposed substantially below the rider seat and covered by the side panels of the vehicle body when viewed from the side of the vehicle.

The hood cover comprises at least one opening to drain the water separated in the crankcase cover. Further, the inner surface of the receiving portion of the central portion also comprises a second drain opening to drain collected water around the air filter assembly.

With the above proposed invention, the following advantages can be obtained such as preventing entry of foreign matter such as dust and debris, prevent the entry of water and mud, preventing entry of hot air surrounding hotter regions of the IC engine. The proposed air intake structure has compact structure, and no changes in capacity of cooling fan are required. Overall, the proposed air intake structure improves the efficiency of the CVT system and improves the overall operation of the two wheeled vehicle.

The present invention along with all the accompanying embodiments and their other advantages would be described in greater detail in conjunction with the figures in the following paragraphs.

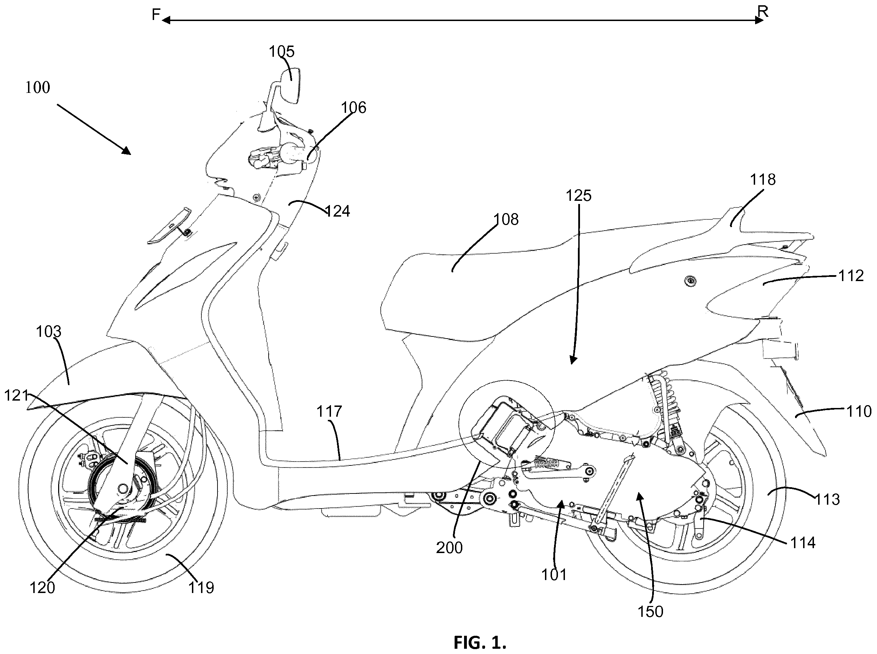

**Fig. 1** illustrates the two wheeled vehicle (**100**) in accordance with one embodiment of the present invention. The vehicle (**100**) is interchangeably termed as a saddle type vehicle (**100**). The vehicle (**100**) comprises of a frame which is conventionally an underbone chassis frame which provides a generally open central area to permit "step-through" mounting by a rider. Typically, the frame assembly comprises of a head tube (not shown), a main tube (not shown), and a pair of side tubes (not shown). The two wheeled vehicle extends from a front portion (**F**) to a rear portion (**R**) in a longitudinal axis. The head tube is disposed towards the front portion (**F**), and the main tube extends downwardly and rearwardly from the head tube forming a flat horizontal step-through portion (**117**). The pair of side-tubes extends rearwardly from the other end of the main tube and supports vehicular attachments such as a seat (108), fuel tank assembly (not shown), a utility box (not shown) and pillion handrest (118). The head tube supports a steering tube (not shown) and further connected to the front suspension system (**121**) at the lower end. A handlebar support member (not shown) is connected to an upper end of the steering tube and supports a handlebar assembly (**106**). Two telescopic front suspension system (**121**) (only one is shown) supports the front wheel (**119**). The upper portion of the front wheel (**119**) is covered by a front fender (**103**) mounted to the lower portion of the steering shaft. There is front brake (not shown) and rear brake (**114**) arranged on the front wheel (**119**) and a rear wheel (**113**) respectively. The rear wheel (**113**) is supported towards the rear side of the frame by the IC engine (**101**) which is horizontally coupled swingably to the rear of the frame assembly of the two wheeled vehicle through a rear suspension system (not shown). The IC engine (**101**) transfers the drive directly to the rear wheel (**113**) as it is coupled directly to it. The IC engine (**101**) comprises a continuously variable transmission (CVT) system, said CVT system disposed leftward of the IC engine (**101**) in the vehicle width direction. The CVT system is enclosed by a CVT cover (**150**), the outer portion of the CVT cover (**150**) is seen in the Fig. 1 with reference to the two wheeled vehicle. An air intake structure (**200**) is disposed on the leftward side of a crankcase (**208**) above the CVT cover (**150**). The air intake structure (**200**) is enclosed by vehicle body panel (see **125**) and is disposed behind the body panel (**125**). Hence, the atmospheric air enters the air intake structure (**200**) from the lower parts of the two wheeled vehicle. The disposition of the air intake portion (not shown) as well as the air intake structure (**200**) is so configured to be disposed substantially below the rider seat (**108**) and at least a portion of the structure partially overlaps the floor board (**117**) as seen in side view of **Fig. 1****.**

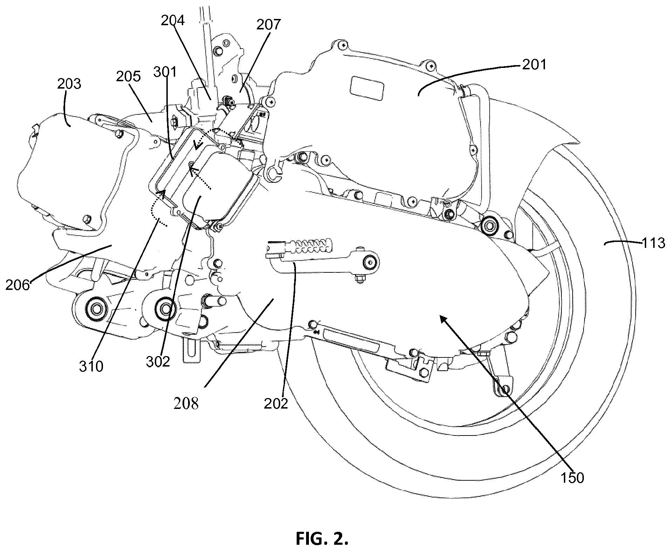

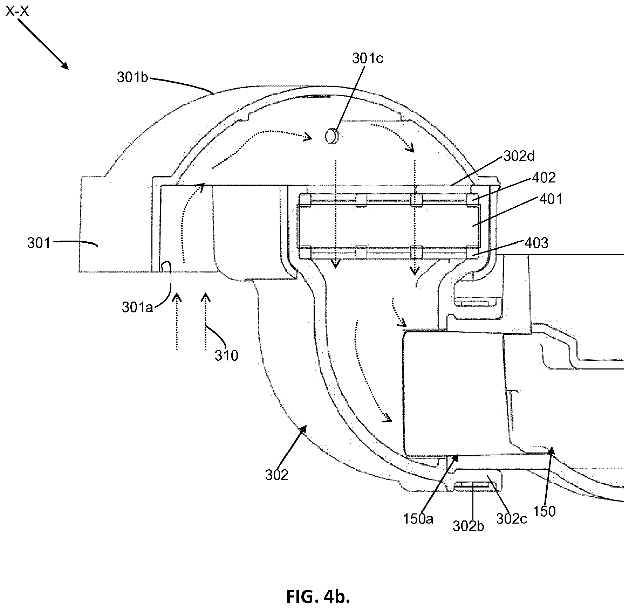

**Fig. 2** illustrates the side view of the rear portion of the two wheeled vehicle illustrating the IC engine (**101**) swingably supported to the pair of side tubes in accordance with the embodiment of the present subject matter. The IC engine (**101**) comprises a cylinder block (not shown) on which a cylinder head (not shown) is disposed forming a combustion chamber at the junction. The cylinder head and cylinder block is enclosed by a shroud assembly (**206**) as a part of a forced air cooling system to extract heat from the hot zones of the IC engine (**101**) including the cylinder head and cylinder block. A cylinder head cover (**203**) is disposed above the cylinder head enclosing a valve train mechanism. An air filter assembly (**201**) draws air inside and filters the same, and it is further throttled by a throttle body (**207**) before being mixed with fuel by a fuel injector (**204**) and supplied to the cylinder head by an intake pipe (**205**). Air fuel mixture is burnt in the combustion chamber which causes a piston to reciprocate within the cylinder block. The cylinder block and cylinder head assembly is mounted on the crankcase (**208**). The CVT system is enclosed within the CVT cover (**150**). The CVT system comprises a V-belt between two stationary pulleys and one of them comprising the variator mechanism. The CVT system encloses a cooling fan (not shown) which draws air inside the CVT system to extract heat, said air drawn through an air intake structure (**200**). The CVT cover (**150**) comprises an air inlet aperture (**150a**-shown in Fig. 4b.) which permits air to the interior portion of the CVT cover (**150**) and the air intake structure (**200**) is disposed on the air inlet aperture (**150a**). The air inlet opening (**301a**) is disposed substantially upstream of the cylinder head cover (**203**) of the IC engine (**101**) and above the kickstart lever (**202**). Additionally, the air intake structure (**200**) is disposed near the air inlet opening (**301a**)

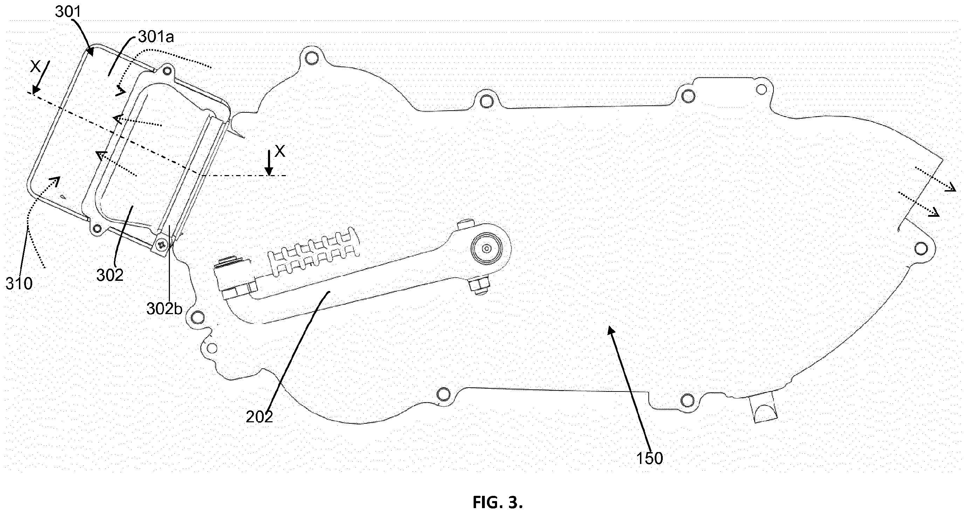

**Fig. 3****.** illustrates the side view of the IC engine (**101**) highlighting the air intake structure (**200**) according to the embodiment of the present subject matter. The CVT cover (**150**) forms the outer portion of the IC engine (**101**) and encloses the CVT system. The CVT cover (**150**) comprises a kickstarter assembly including a kickstart lever (**202**) and a ratchet mechanism (**501**) configured to engage with the crankshaft on the front side of the IC engine (**101**). The air intake structure (**200**) is disposed on the front portion of the CVT cover (**150**) towards the cylinder head and cylinder block side. The air intake structure (**200**) has an air inlet opening (**301a**) facing outwards in the two wheeled vehicle (**100**) width direction. This is an important aspect of the present subject matter, as in prior art, the opening for air inlet faced towards the IC engine (**101**) side. The opening disclosed in the prior art causes the entry of hot air surrounding the IC engine (**101**) heated up due to contact with hotter areas of the IC engine (**101**) entering the CVT cover. However, in the embodiment of the present subject matter, the air intake structure (**200**) comprises a hood cover (**301**) enclosing the air inlet opening (**301a**) from all three sides and permitting entry only in a narrow area facing almost perpendicular to the vehicle longitudinal axis (F-R) towards the vehicle width direction. This arrangement of the hood cover (**301**) shields the air inlet opening by entry of hot air surrounding the IC engine (**101**), and ensures only atmospheric air excluding mud and water enters from the vehicle bottom to the CVT cover (**150**). The direction of air entry (**310**) into the air inlet opening **(301a)** is illustrated in **Fig. 3****.**

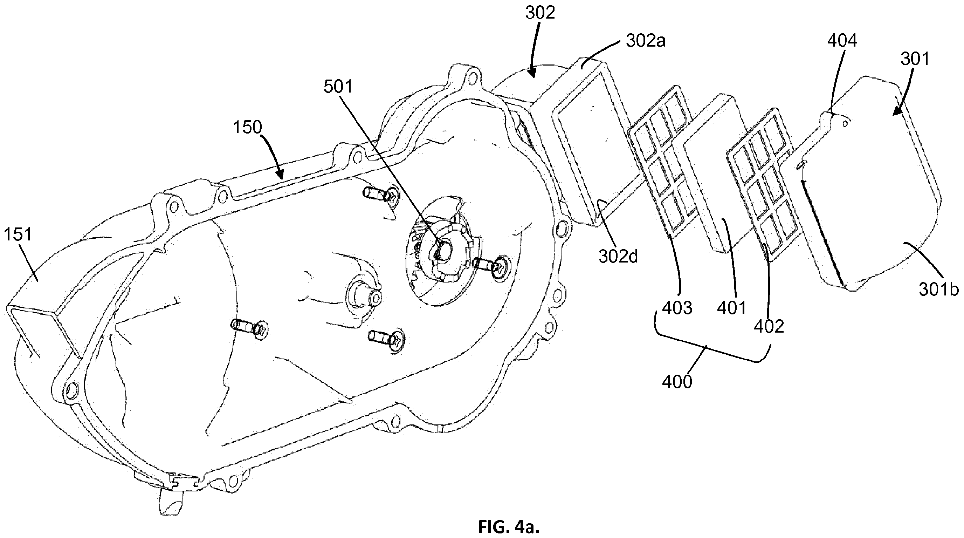

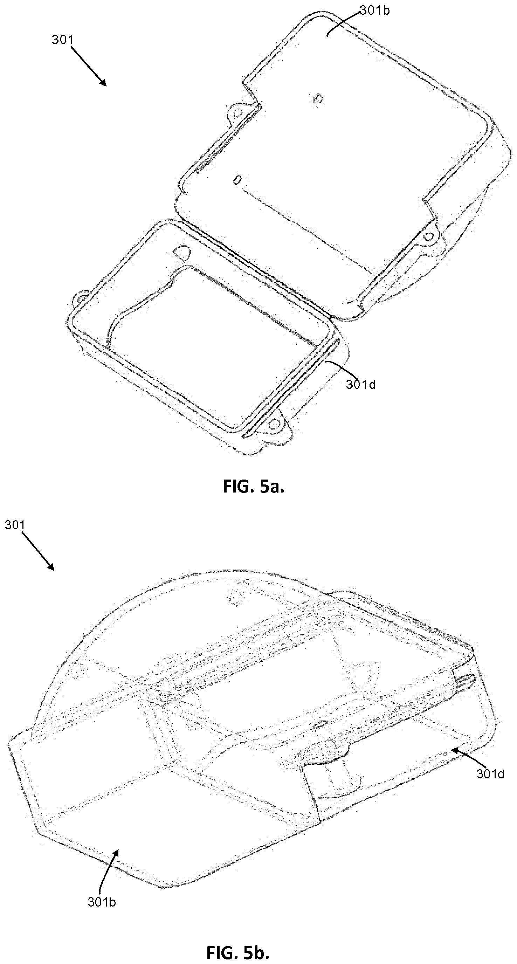

**Fig. 4a****.** illustrates the exploded view of the intake air structure and **Fig. 4b**. illustrates a cross-sectional top view (**X-X**) of the intake air assembly according to the embodiment of the present subject matter. The air intake structure (**200**) comprises the hood cover (**301**), a central portion (**302**) disposed between the hood cover the CVT cover (**150**), and an air filter assembly (**400**) disposed within the central portion. The hood cover (**301**) is made up of two parts, namely a outer portion (**301b**) and an inner portion (**301d**-shown in **Fig. 5a****.**). The outer portion (**301b**) of the hood cover (**301**) is configured to provide a U-shaped serpentine path for air entry before entering inside of the CVT cover (**150**), and is important additional aspect of the present invention. The outer portion (**301b**) has a semicircular profile and the inner portion **(301d)** is mounted on the central portion (**302**) by press fitting it such that, one face of the central portion (see **302a**) forms a partition wall on the hood cover (**301**). This way the outer portion (301b) which is hinged on one side can be opened and closed, and in close condition this arrangement forms the air inlet opening (**301a**) for the air entry. **Fig. 5a.** and **Fig. 5b****.** illustrates a hood cover of the air intake structure in open condition and close condition according to the embodiment of the present subject matter. The serpentine path taken by the air around the semicircular profile of the outer portion (**301b**) prevents dust and debris from entering inside the CVT cover (**150**). As dust and debris are heavier particles, due to centrifugal action when the air flows through the serpentine path, the dust and debris are thrown outside and settle below and within the hood cover (**150**) and does not enter the central portion (**302**). Hence, the hood cover (**301**) performs a pre-filtration function preventing dust and debris from damaging the air filter assembly (**400**) and clogging the same. The hood cover (**301**) also comprises at least one opening (**301c**) to drain the water and mud accumulated in the hood cover (**150**) which also settles at the bottom due to centrifugal action. Thus, the air entering the air filter assembly (**400**) is clean, dust and debris free and free of any water or mud. This helps enhance life of the air filter assembly (**400**) and also improve cooling effectiveness of the forced air cooling system. In one embodiment, the hood cover (**301**) is made up of synthetic material made from a wide range of organic polymers.

The air filter assembly (**400**) is configured to filter air before entry into the CVT cover (**150**). The air filter assembly (**400**) is disposed at that end of the central portion (**302**) immediately downstream of the hood cover (**150**). The cross sectional area of the end of the central portion (**302**) is larger than the rest of the profile and an accommodating space (**302a**) is formed to securely accommodate the air filter assembly (**400**). The air filter assembly (**400**) disposed at this location enables its design to be made larger thus providing greater cross-sectional area for air filtration as compared to air filter assembly (**400**) disposed near the air entry aperture (**150a**) on the CVT cover (**150**). Further, the air filter assembly (**400**) has the filtration face oriented vertically with respect to the horizontal plane. This orientation enables the dust accumulated at the air filter assembly (**400**) to fall downwards due to gravity and not sit of the filter element (**401**). Further, even if dust particles manage to settle at the filter element (**401**) the arrangement permits the easy removal as it falls down due to engine vibrations. The air filter assembly (**400**) comprises a filter element (**401**) enclosed between two cage support members (**402, 403**). The support members (**402**, **403**) are made up of plastic material and support the filter element (**401**) which is made up of foam material. The filter element (**401**) is assembled between the two support members (**402**, **403**) and then securely inserted into the accommodating space (**302a**) by press fitting. In one embodiment, the central portion (**302**) is made up of rubber material, and hence the air filter assembly (**400**) can be easily press-fitted within the accommodating space (**302a**).

The accommodating space (**302a**) comprises a stepped structure (**302d**) at the lowest point on the end of the central portion (**302**). This stepped portion **(302d)** prevents the further entry of water to the central portion (**302**) after it is blocked by the air filter assembly (**400**) and settles at the bottom due to gravity. In another embodiment, the stepped portion (**302d**) can comprise a drain hole (not shown) to drain the settled water or mud at this area. The other end (**302c**) of the central portion (**302**) opposite to that of the accommodating space (**302a**) has a profile such that it can be inserted over the air entry aperture (**150a**). The connection is further secured by using clamps (**302b**).

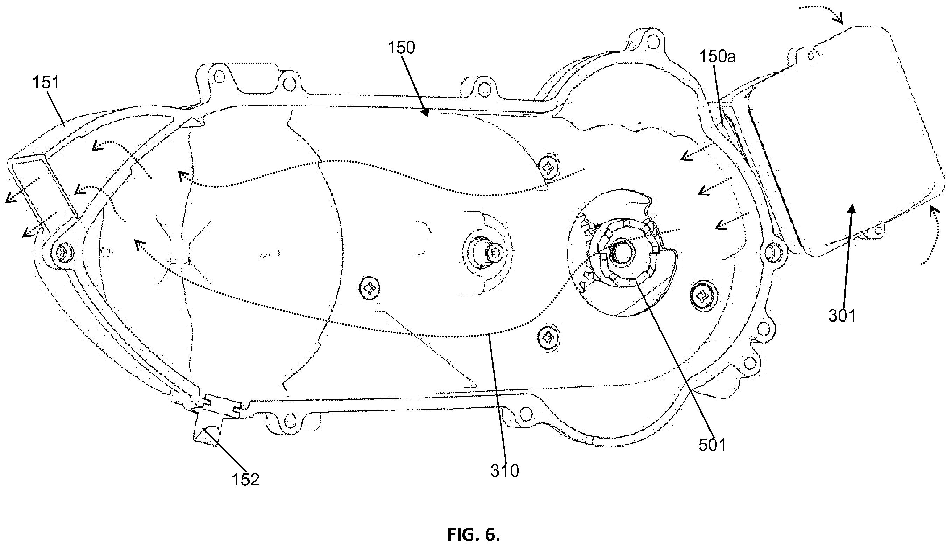

**Fig. 6** illustrates the interior of the CVT cover (**150**) according to the embodiment of the present subject matter. A hot air exit (**151**) is disposed opposite to the air inlet aperture (**150a**) and discharges the air in the longitudinal direction of the vehicle. The hot air exit (**151**) is a large opening curving the air and directing the air towards the ground of the two wheeled vehicle. The hot air exit (**150**) is formed as a part of the CVT cover (**150**) and is enclosed on all four sides. The CVT cover (**150**) also has a one-way drain plug (**152**) disposed at the bottom to drain any water accumulated during process of cooling.

Many modifications and variations of the present subject matter are possible in the light of above disclosure. Therefore, within the scope of claims of the present subject matter, the present disclosure may be practiced other than as specifically described.

## Claims

1. A saddle type vehicle (100) comprising:
an internal combustion (IC) engine (101), said internal combustion (IC) engine (101) comprising a crankcase (208) to accommodate internal components of said IC engine (101);
a crankcase cover (150) enclosing said crankcase (208), said crankcase accommodating a V-belt type continuously variable transmission (CVT) mechanism to vary torque and speed of the saddle type vehicle (100); wherein,
said crankcase cover (150) comprises:
an air intake structure (200) disposed on said crankcase cover (150) for directing air to cool said CVT mechanism; said air intake structure (200) comprises a hood cover (301); and said hood cover (301) comprising an air inlet opening (301a), said air inlet opening (301a) facing outwards in said saddle type vehicle (100) width direction;
**characterized in that**,
said air intake structure (200) comprises a central portion (302) disposed between the hood cover (301) and the crankcase (208) of the IC engine (101); and an air filter assembly (400) disposed within said central portion (302), wherein the air filter assembly (400) is configured to filter air before entry into the crankcase (208) of the IC engine (101).

2. The saddle type vehicle (100) as claimed in claim 1, wherein said hood cover (301) is configured to provide a U-shaped serpentine path for air entry before entering inside the crankcase (208).

3. The saddle type vehicle (100) as claimed in claim 1, wherein the air filter assembly (400) has a rectangular cross section and has a longer edge oriented vertically with respect to a horizontal plane.

4. The saddle type vehicle (100) as claimed in claim 1, wherein the air filter assembly (400) comprises a filter element (401) configured to trap dust entering the crankcase cover (150), and a pair of cage support members (402, 403) disposed on either side of said filter element (401) to secure said filter element (401).

5. The saddle type vehicle (100) as claimed in claim 1, wherein the hood cover (301) comprises at least one opening (152) to drain the water accumulated in the crankcase cover (150).

6. The saddle type vehicle (100) as claimed in claim 1, wherein disposed on one end of said central portion (302) is a receiving portion which is positioned closer to the hood cover (301), said receiving portion having dimensions similar to dimensions of the air filter assembly (400), and said receiving portion being configured to accommodate the air filter assembly (400) on its inner surface.

7. The saddle type vehicle (100) as claimed in claim 6, wherein said inner surface of the receiving portion comprises a second drain opening to drain collected water around the air filter assembly (400).

8. The saddle type vehicle (100) as claimed in claim 1, wherein the air intake structure (200) is disposed substantially below a rider seat (108) of the saddle type vehicle (100), and wherein at least a portion of the air intake structure (200) partially overlaps a floor board (117) of the saddle type vehicle (100).

9. The saddle type vehicle (100) as claimed in claim 1, wherein the air inlet opening (301a) is disposed substantially upstream of a cylinder head cover (203) of the IC engine (101) and above a kickstart lever (202) of the saddle type vehicle (100).

## Patentansprüche

1. Fahrzeug (100) vom Satteltyp, umfassend:
einen Verbrennungsmotor (101), wobei der Verbrennungsmotor (101) ein Kurbelgehäuse (208) für die Aufnahme interner Komponenten des Verbrennungsmotors (101) umfasst;
eine Kurbelgehäuseabdeckung (150), die das Kurbelgehäuse (208) umgibt, wobei in dem Kurbelgehäuse eine Mechanik eines stufenlos verstellbaren Getriebes (CVT) vom Keilriementyp zum Ändern des Drehmoments und der Geschwindigkeit des Fahrzeugs (100) vom Satteltyp aufgenommen ist;
wobei die Kurbelgehäuseabdeckung (150) aufweist: eine an der Kurbelgehäuseabdeckung (150) angeordnete Lufteinlassstruktur (200) zum Leiten von Luft zur Kühlung der CVT-Mechanik; wobei die Lufteinlassstruktur (200) eine Abdeckhaube (301) umfasst, wobei die Abdeckhaube (301) eine Lufteinlassöffnung (301a) aufweist, welche nach außen in der Richtung der Breite des Fahrzeugs (100) vom Satteltyp weist;
**dadurch gekennzeichnet, dass**
die Lufteinlassstruktur (200) einen mittleren Teil (302), der sich zwischen der Abdeckhaube (301) und dem Kurbelgehäuse (208) des Verbrennungsmotors (101) befindet, und eine in dem mittleren Teil (302) befindliche Luftfilteranordnung (400) aufweist, wobei die Luftfilteranordnung (400) dazu eingerichtet ist, Luft vor dem Eingang in das Kurbelgehäuse (208) des Verbrennungsmotors (101) zu filtern.

2. Fahrzeug (100) vom Satteltyp nach Anspruch 1, wobei die Abdeckhaube (301) dazu eingerichtet ist, einen U-förmigen Kurvenweg für den Lufteintritt vor dem Eingang in das Innere des Kurbelgehäuses (208) zu schaffen.

3. Fahrzeug vom Satteltyp (100) nach Anspruch 1, wobei die Luftfilteranordnung (400) einen rechteckigen Querschnitt hat und eine längere Kante aufweist, die vertikal in Bezug auf eine horizontale Ebene ausgerichtet ist.

4. Fahrzeug (100) vom Satteltyp nach Anspruch 1, wobei die Luftfilteranordnung (400) ein Filterelement (401), das zum Auffangen von in die Kurbelgehäuseabdeckung (150) eintretendem Staub eingerichtet ist, und ein Paar von Käfigträgerelementen (402, 403), die sich beiderseits des Filterelements (401) zur Sicherung des Filterelements (401) befinden, aufweist.

5. Fahrzeug (100) vom Satteltyp nach Anspruch 1, wobei die Abdeckhaube (301) mindestens eine Öffnung (152) zum Ablassen des in der Kurbelgehäuseabdeckung (150) angesammelten Wassers aufweist.

6. Fahrzeug (100) vom Satteltyp nach Anspruch 1, wobei an einem Ende des mittleren Abschnitts (302) ein Aufnahmebereich befindlich ist, der der Abdeckhaube (301) näher positioniert ist, wobei der Aufnahmebereich Abmessungen aufweist, die jenen der Luftfilteranordnung (400) ähnlich sind, und wobei der Aufnahmebereich zur Aufnahme der Luftfilteranordnung (400) an seiner Innenfläche eingerichtet ist.

7. Fahrzeug (100) vom Satteltyp nach Anspruch 6, wobei die Innenfläche des Aufnahmebereichs eine zweite Auslassöffnung zum Ablassen von um der Luftfilteranordnung (400) angesammeltem Wasser aufweist.

8. Fahrzeug (100) vom Satteltyp nach Anspruch 1, wobei die Lufteinlassstruktur (200) sich im Wesentlichen unterhalb eines Fahrersitzes (108) des Fahrzeugs (100) vom Satteltyp befindet, und wobei zumindest ein Teil der Lufteinlassstruktur (200) sich teilweise mit einem Bodenbrett (117) des Fahrzeugs (100) vom Satteltyp überlappt.

9. Fahrzeug (100) vom Satteltyp nach Anspruch 1, wobei die Lufteinlassöffnung (301a) sich im Wesentlichen stromaufwärts einer Zylinderkopfabdeckung (203) des Verbrennungsmotors (101) und oberhalb eines Kickstarthebels (202) des Fahrzeugs (100) vom Satteltyp befindet.

## Revendications

1. Un véhicule de type selle (100) comportant :
un moteur (101) à combustion interne (CI), ledit moteur (101) à combustion interne (CI) comprenant un carter (208) pour recevoir les composants internes dudit moteur à CI (101) ;
un couvercle de carter (150) renfermant ledit carter (208), ledit carter recevant un mécanisme de transmission à variation continue (TVC) de type courroie trapézoïdale pour faire varier le couple et la vitesse du véhicule de type selle (100) ;
ledit couvercle de carter (150) comportant :
une structure d'admission d'air (200) disposée sur ledit couvercle de carter (150) pour diriger de l'air afin de refroidir ledit mécanisme TVC, ladite structure d'admission d'air (200) comportant un couvercle de capot (301), ledit couvercle de capot (301) comprenant une ouverture d'entrée d'air (301a), ladite ouverture d'entrée d'air (301a) étant tournée vers l'extérieur dans le sens de la largeur dudit véhicule de type selle (100) ;
**caractérisé en ce que**
ladite structure d'admission d'air (200) comporte une partie centrale (302) disposée entre le couvercle de capot (301) et le carter (208) du moteur à CI (101) et un ensemble de filtre à air (400) disposé à l'intérieur de ladite partie centrale (302), l'ensemble de filtre à air (400) étant configuré pour filtrer l'air avant son entrée dans le carter (208) du moteur à CI (101).

2. Véhicule de type selle (100) selon la revendication 1, dans lequel ledit couvercle de capot (301) est configuré pour pourvoir un chemin serpentin en forme de U pour l'entrée d'air avant d'entrer à l'intérieur du carter (208).

3. Véhicule de type selle (100) selon la revendication 1, dans lequel l'ensemble de filtre à air (400) a une section transversale rectangulaire et a un bord plus long qui est orienté verticalement par rapport à un plan horizontal.

4. Véhicule de type selle (100) selon la revendication 1, dans lequel l'ensemble de filtre à air (400) comprend un élément de filtre (401), configuré pour piéger de la poussière entrant dans le couvercle du carter (150), et une paire d'éléments de support de cage (402, 403) disposés de part et d'autre dudit élément de filtre (401) pour attacher ledit élément de filtre (401).

5. Véhicule de type selle (100) selon la revendication 1, dans lequel le couvercle du capot (301) comprend au moins une ouverture (152) pour évacuer l'eau accumulée dans le couvercle du carter (150).

6. Véhicule de type selle (100) selon la revendication 1, dans lequel une partie réceptrice, disposée à une extrémité de ladite partie centrale (302), est positionnée plus près du couvercle de capot (301), ladite partie réceptrice ayant des dimensions similaires aux dimensions de l'ensemble de filtre à air (400), et ladite partie réceptrice étant configurée pour recevoir l'ensemble de filtre à air (400) sur sa surface intérieure.

7. Véhicule de type selle (100) selon la revendication 6, dans lequel ladite surface intérieure de la partie réceptrice comprend une deuxième ouverture de drainage pour drainer de l'eau collectée autour de l'ensemble de filtre à air (400).

8. Véhicule de type selle (100) selon la revendication 1, dans lequel la structure d'admission d'air (200) est disposée sensiblement sous un siège de conducteur (108) du véhicule de type selle (100), et au moins une partie de la structure d'admission d'air (200) chevauche partiellement une planche de sol (117) du véhicule de type selle (100).

9. Véhicule de type selle (100) selon la revendication 1, dans lequel l'ouverture d'entrée d'air (301a) est disposée sensiblement en amont d'un couvercle de culasse (203) du moteur à CI (101) et au-dessus d'un levier de démarrage (202) du véhicule de type selle (100).
